# EUROPÄISCHE PATENTSCHRIFT

(11) **EP 1 399 672 B1**
(45) Veröffentlichungstag und Bekanntmachung des Hinweises auf die Patenterteilung: **02.11.2006**
(21) Anmeldenummer: 02700004.1
(22) Anmeldetag: 27.02.2002
(51) Int. Cl.: F02P 23/04

(54) **EINRICHTUNG ZUM ZÜNDEN EINES KRAFTSTOFF-LUFTGEMISCHES**
DEVICE FOR IGNITING A FUEL-AIR MIXTURE
DISPOSITIF POUR ALLUMER UN MELANGE CARBURANT-AIR

(30) Priorität: 05.04.2001 AT 5502001
(43) Veröffentlichungstag der Anmeldung: 24.03.2004
(73) Patentinhaber: GE Jenbacher GmbH & Co OHG, 6200 Jenbach (AT)
(72) Erfinder: WINTNER, Ernst, A-2295 Oberweiden (AT); UEDA, Ken-ichi, Chofu, Tokio 182-0026 (JP)
(74) Vertreter: Torggler, Paul Norbert
(86) Internationale Anmeldenummer: PCT/AT2002/000058
(87) Internationale Veröffentlichungsnummer: WO 2002/081904

(56) Entgegenhaltungen:
- WO-A-98/48221
- DE-A- 3 600 255
- DE-A- 4 405 769
- GB-A- 2 080 877
- US-A- 4 852 529
- PATENT ABSTRACTS OF JAPAN vol. 008, no. 116 (M-299), 30. Mai 1984 (1984-05-30) & JP 59 023081 A (NIPPON DENSO KK), 6. Februar 1984 (1984-02-06)

## Beschreibung

Die vorliegende Erfindung betrifft eine Einrichtung zum Zünden eines Kraftstoff-Luftgemisches im Brennraum eines Verbrennungsmotors, insbesondere eines stationären Gasmotors, mit mindestens einer Lichtquelle, einer optischen Übertragungseinrichtung und einer Einkopplungsoptik zum Fokussieren von Licht in den Brennraum.

Gattungsgemäße Zündeinrichtungen sind beim Stand der Technik z.B. aus der DE 19911737 A1 bekannt. Hier wird ein in einem Lichtleiter geführter Laserstrahl über ein Lichtelement in die Brennkammer eingekoppelt. Darüber hinaus sehen andere Ansätze, wie z.B. die US 4434753 oder die US 4523552 vor, daß Zusatzstoffe mit hoher Lichtabsorption im Bereich des eingespeisten Laserlichts zusätzlich in den Brennraum eingeblasen werden. Werden diese von einem getriggerten Laser getroffen, so werden sie aufgeheizt. Dies führt zur Zündung des Kraftstoff-Luftgemisches in der Brennkammer.

Grundsätzlich ist es bei allen Laser-Zündeinrichtungen notwendig, die zur Zündung benötigte Zündenergie zum richtigen Zeitpunkt und in ausreichender Intensität durch den Laser zur Verfügung zu stellen. Hierbei ist es notwendig, eine Anordnung zu schaffen, welche den permanenten Erschütterungen und der um den Brennraum anzutreffenden Hitze standhält. Darüber hinaus muß die Zündeinrichtung im Herstellungsverfahren günstig sein, wenn sie eine breite Anwendung erfahren soll. Diese Anforderungen werden von den gattungsgemäßen Zündeinrichtungen beim Stand der Technik nicht oder nur teilweise erfüllt.

Aufgabe der Erfindung ist es somit, eine gattungsgemäße Einrichtung zu schaffen, bei der die Nachteile des Standes der Technik beseitigt sind.

Dies wird erfindungsgemäß dadurch erreicht, daß mindestens eine Masterlichtquelle zur laufenden vorzugsweise periodischen Abgabe von ungetriggerten, selbst nicht zündfähigen Masterlichtimpulsen vorgesehen ist und daß die Übertragungseinrichtung mindestens einen Verstärker umfaßt, der selektiv triggerbar ist und einzelne oder Gruppen von Masterlichtimpulsen auf ein Energieniveau verstärkt, das zur Zündung des Kraftstoff-Luftgemisches ausreicht.

Es ist somit vorgesehen, daß Masterlichtimpulse permanent mit einer festen Frequenz erzeugt, über eine Übertragungseinrichtung zum jeweils zu zündenden Zylinder geführt und über eine Einkopplungsoptik in den Brennraum jedes Zylinders eingekoppelt werden. Die Energie dieser permanent in festen Zeitintervallen auftretenden Masterlichtimpulse reicht hierbei allein nicht zur Zündung des Kraftstoff-Luftgemisches aus. Eine Triggerung der Zündung erfolgt erst, indem das Energieniveau einzelner Masterlichtimpulse in einem selektiv triggerbaren, mindestens einem Zylinder zugeordneten, Verstärker auf das für die Zündung notwendige Energieniveau gebracht wird. Dieses Konzept ermöglicht es, daß für mehrere Zylinder einer Brennkraftmaschine nur eine Masterlichtquelle notwendig ist, welche über eine geeignete Übertragungseinrichtung Lichtimpulse zu jedem Zündort jedes Zylinders aussendet. Es ist hierbei sowohl möglich, daß alle Zylinder mindestens eines Verbrennungsmotors, als auch daß mehrere Verstärker, welche an eine Zylinder angeordnet sind von mindestens einer Masterlichtquelle mit Lichtimpulsen versorgt werden. Dies bedeutet, daß die Masterlichtquelle dezentral außerhalb des Erschütterungs- und Hitzebereiches des Verbrennungsmotors angeordnet sein kann.

Eine besonders günstige Variante sieht vor, daß die Masterlichtquelle ein Laser ist. Günstige Varianten hiervon bestehen darin, daß der Laser ein ― vorzugsweise diodengepumpter und/oder passiv gütegeschalteter und/oder aktiv gütegeschalteter ― Festkörperlaser ist. Unter den Festkörperlasern stellen Yb-Laser und/oder ein Nd-Laser ― vorzugsweise mit Nd-Laser Cr⁴⁺ sättigbarem Absorber -günstige Möglichkeiten dar. Diese Varianten sehen darüber hinaus vor, daß der Nd-Laser in einem geeigneten Wirtsmaterial bevorzugt Nd:YAG eingelagert ist. Als alternatives Wirtsmaterial kann z.B. auch YLF, Vanadat verwendet werden. Varianten sehen darüber hinaus vor, daß die Masterlichtquelle Microdisk-Form aufweist.

Um die nötige Präzision in der Festlegung des Zündzeitpunktes zu erreichen, ist es günstig, daß die Masterlichtquelle Lichtpulse bzw. Laserpulse mit einer Wiederholfrequenz von 1 bis 25 kHz ― vorzugsweise von 5 kHz ― aussendet. Bezüglich der Pulsdauer ist es günstig, daß die Masterlichtquelle Lichtpulse bzw. Laserpulse mit einer Pulsdauer von 1 ns bis 500 ns ― vorzugsweise 100 ns bis 300 ns (Nanosekunden) ― aussendet. Bezüglich der Wellenlänge des von der Masterlichtquelle ausgesendeten Lichts ist es günstig, daß die Wellenlänge des verwendeten Lichts zwischen 0,5 µm (Mikrometer) und 20 µm, vorzugsweise zwischen 0,5 µm und 5 µm, liegt.

Günstige Varianten sehen zum einen vor, daß mindestens ein Verstärker der Übertragungseinrichtung mindestens einen lichtverstärkenden ― vorzugsweise laseraktiven ― Lichtleiter ― vorzugsweise eine flexible Lichtleitfaser umfaßt. Zum anderen sehen günstige Varianten vor, daß mindestens ein Verstärker der Übertragungseinrichtung mindestens ein lichtverstärkendes, vorzugsweise laseraktives monolithisches Stäbchen und/oder mindestens ein lichtverstärkendes, vorzugsweise laseraktives Kristallscheibchen umfaßt. Bei beiden Varianten ist es erfindungsgemäß vorgesehen, daß die Masterlichtquelle fix per Glasfaser mit mehreren, jeweils mindestens einem Zylinder zugeordneten Verstärkern verbunden ist. In diesen Verstärkern wird entsprechend innerhalb eines definierten Zeitintervalls getriggert im lichtverstärkenden bzw. laseraktiven Medium eine Energiemenge zur Verfügung gestellt, welche den nächsten auftretenden Masterlichtimpuls in der Weise energetisch verstärkt, daß eine Zündung des Kraftstoff-Luftgemisches in der Brennkammer des dem jeweiligen Verstärker zugeordneten Zylinders ausgelöst wird. Die Festlegung des Zündzeitpunktes erfolgt dabei durch die Triggerung des Verstärkers. Durch diese Anordnung kann die hitze- und erschütterungsanfällige Masterlichtquelle an einem dezentralen Ort angeordnet werden, während die Aufteilung ihrer Impulse und der dabei transportierten Leistung über Monomodefasem und/oder dünne Multimodefasern erfolgen kann. Die Masterlichtquelle kann dadurch mechanisch (in Bezug auf Vibration und Temperatur) vom Zylinder entkoppelt werden, während die wesentlich robusteren Verstärker (z.B. monolithische Stäbchen oder Kristallscheibchen) am Zylinder sitzen.

Des weiteren ist es besonders günstig, daß mindestens ein Verstärker das Energieniveau der Licht- bzw. Laserimpulse auf 0,5 mJ (Millijoule) bis 10 mJ ― vorzugsweise 1 mJ bis 5 mJ ― verstärkt.

Im Falle der Verwendung einer lichtverstärkenden und/oder laseraktiven, vorzugsweise flexiblen, Lichtleitfaser als Verstärker ist es besonders günstig, daß diese einen vorzugsweise spulenförmig, aufgewickelten Abschnitt aufweist. Hierdurch kann die zur Verstärkung notwendige Länge der lichtverstärkenden vorzugsweise flexiblen Lichtleitfaser zu einer insgesamt kleinen Baugröße zusammengefaßt werden.

Günstige Varianten sehen vor, daß zumindest eine triggerbare auf mindestens einen lichtverstärkenden, vorzugsweise laseraktiven Lichtleiter und/oder mindestens ein lichtverstärkendes vorzugsweise laseraktives monolithisches Stäbchen und/oder mindestens ein lichtverstärkendes vorzugsweise laseraktives Kristallscheibchen einwirkende Pumplichtquelle vorgesehen ist. Hierbei kann die Pumplichtquelle longitudinal oder transversal vorzugsweise über Glasfasern an das lichtverstärkende bzw. laseraktive Material angekoppelt werden.

Günstige Ausführungsformen sehen vor, daß die Pumplichtquelle ein Halbleiterlaser ist. So können z.B. quasi ― cw Laserdioden mit 800 nm Wellenlänge für Nd verwendet werden. Die Triggerung erfolgt bei diesen Ausführungsformen nach Bedarf für jeden einzelnen Zylinder über die Stromversorgung z.B. der quasi ― cw ― Laserdioden, deren Emissionsdauer vorzugsweise zwischen 150 und 200 ms beträgt.

Weitere Merkmale und Einzelheiten der vorliegenden Erfindung ergeben sich in der nachfolgenden Figurenbeschreibung. Dabei zeigt:
Fig. 1 eine schematische Darstellung einer Anordnung aus Masterlichtquelle, Übertragungseinrichtung und Zylindern,
Fig. 2 eine Detailansicht zur Anordnung eines Verstärkers an einem Zylinder,
Fig. 3 eine schematische Darstellung zur zeitlichen Abfolge und Überlagerung der Energie von Masterlichtimpuls und Pumpstrahlung des Verstärkers und
Fig. 4 eine schematische Darstellung zur Ausführungsform eines Verstärkers als vorzugsweise spulenförmig aufgewickelte lichtverstärkende bzw. laseraktive Lichtleitfaser.

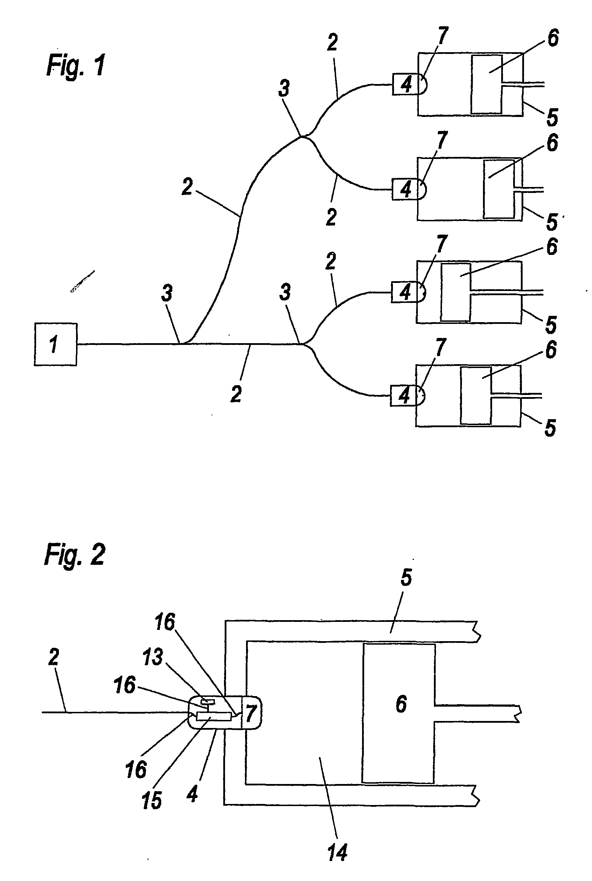

In Fig. 1 ist schematisch ein räumliches Verteilungsschema der Glasfaserverbindung dargestellt. Die Masterlichtquelle 1 speist freilaufend Lichtimpulse 8 in das System von Glasfaserverbindungen 2 ein. Hierbei ist es z.B. vorgesehen, daß die Licht- bzw. Laserimpulse 8 mit einer Taktfrequenz von z.B. 5 kHz von der Masterlichtquelle 1 ausgesendet werden. Die Lichtimpulse 8 laufen durch die Übertragungseinrichtung, welche aus den Glasfasern 2 und ihren Abzweigungen (Kopplern) 3 besteht und gelangen überwiegend unverstärkt durch die Verstärker 4 und die Einkopplungsoptik 7 in die jeweiligen Zylinder 5. Wenn die Masterlichtimpulse 8 unverstärkt in die Zylinder 5 gelangen, reicht ihre Energie nicht für die Zündung von eventuell momentan im Brennraum 14 des Zylinders 5 vorhandenem Kraftstoff-Luft-Gemisch aus. Hierdurch werden Fehlzündungen vermieden.

Fig. 2 zeigt eine Detaildarstellung des Zylinders 5 mit Kolben 6. In dem Zylinder 5 ist ein Verstärker 4 mit der Einkopplungsoptik 7 in der Weise angebracht, daß die aus dem Verstärker 4 austretenden Laserimpulse durch die Einkopplungsoptik 7 in den Brennraum 14 des Zylinders 5 eintreten. Der Verstärker 4 weist vorzugsweise ein lichtverstärkendes bzw. laseraktives Material 15 z.B. ein monolithisches Stäbchen oder Kristallscheibchen auf. Das laseraktive Material des Verstärkers 4 wird durch eine Pumplichtquelle 13 (z.B. durch eine quasi ― cw- Laserdiode mit ca. 800 µm für Nd) longitudinal oder transversal (hier dargestellt) gepumpt. Die Triggerung des Verstärkers erfolgt über die Stromversorgung (hier nicht dargestellt) der Pumplichtquelle 13 (hier quasi cw-Laserdiode). Die typische Emissionsdauer von quasi-cw-Laserdioden liegt zwischen 150 und 200 ms. Günstigerweise ist das laseraktive Material 15 mit der Einkopplungsoptik 7, der Glasfaser 2 und/oder der Pumplichtquelle 13 über Glasfasern 16 verbunden.

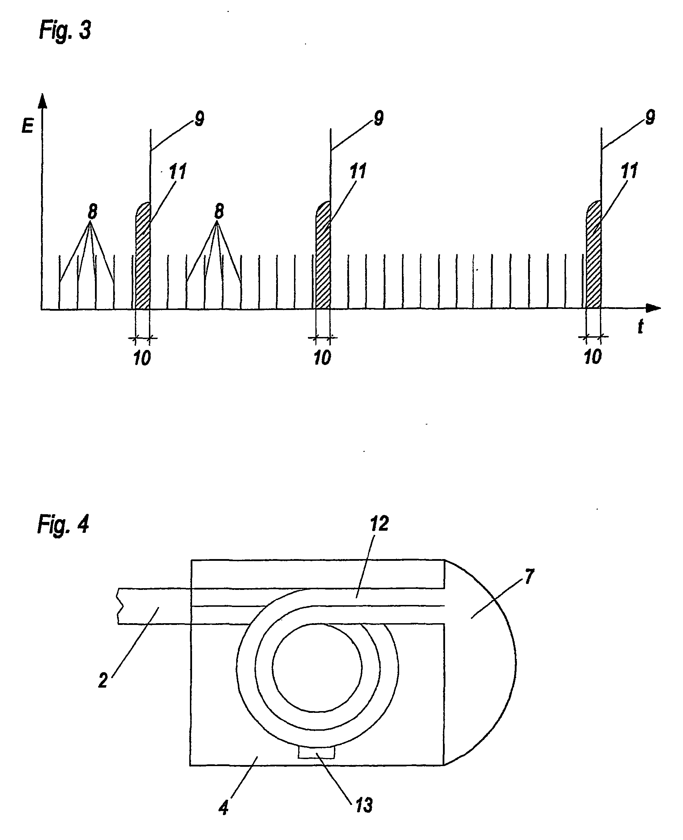

Die Art der Verstärkung des Masterlichtimpulses durch das lichtverstärkende bzw. laseraktive Material 15 im Verstärker 4 wird anhand der Fig. 3 erläutert. Fig. 3 zeigt ein Diagramm in dem die Energie E der über die Einkopplungsoptik 7 in den Brennraum 14 verschiedener Zylinder 5 eingebrachten Licht- bzw. Laserimpulse gegen die Zeit t aufgetragen ist. Der zeitliche Ablauf kann wie anhand von Fig. 3 illustriert wie folgt beschrieben werden:

Mit einer vorzugsweisen Frequenz von 5 kHz laufen die Masterlichtimpulse 8 durch die Übertragungseinrichtung, welche aus den Glasfasern 2 und den Abzweigungen (Kopplern) 3 besteht, zu den Verstärkern 4 und gelangen durch diese und deren Einkopplungsoptiken 7 fast immer unverstärkt in die Zylinder, wo sie in ihrer unverstärkten Form keine Zündung hervorrufen. Wenn im Zeitintervall 10 das üchtverstärkende bzw. laseraktive Material 15 eines Verstärkers 4 mit der richtigen Vorlaufzeit von bis zu 200 ms gepumpt wird, dann erfährt der nächste Masterlichtimpuls 8 die geeignete Verstärkung durch die gepumpte Energie 11, sodaß dadurch ein Gesamtzündimpuls 9 gebildet wird, welcher zur Zündung des im Brennraum 14 komprimierten Kraftstoff-Luftgemisches führt. Die Triggerung des Pumpens und damit des Zündimpuls 9 erfolgt daher über die Stromzufuhr (hier nicht dargestellt) der Pumpquelle 13. Mit anderen Worten wird für einen Zylinder erst dann ein zündfähiger Licht- bzw. Laserimpuls 9 gebildet wenn im Zeitintervall 10 zwischen zwei Masterlichtimpulsen 8 ausreichend Energie im lichtverstärkenden bzw. laseraktiven Material 15 des Verstärkers 4 durch Pumpen bereitgestellt wird. Steht ausreichend Energie 11 im lichtverstärkenden bzw. laseraktiven Material 15 bereit, so wird der nächste Masterlichtimpuls 8 zu einem Zündimpuls 9 verstärkt. Die erforderliche Genauigkeit bei der Festlegung des Zündzeitpunktes (Zündwinkel) liegt bei ca. 0,2 ms (Millisekunde) bis 1 ms vorzugsweise bei ca. 0,5 ms. Die Zündzeitpunkte für das Auftreten der Zündimpulse 9 (Zündwinkel) der einzelnen Zylinder sind nicht zeitlich gleich verteilt wie auch in Fig. 3 dargestellt. Durch eine ausreichend hohe Wiederholfrequenz (hier 5 kHz) der Masterlichtimpulse 8 wird eine genügend feine zeitliche Verteilung möglicher Zündzeitpunkte für eine zeitliche Ungleichverteilung der Zündzeitpunkte einzelner Zylinder gewährleistet. Die Strahlqualität wird hierbei durch die Masterlichtquelle und Übertragungseinrichtung bestehend aus Glasfaserleitung 2 und Abzweigungen 3 bestimmt. Der Verstärker 4 beeinflußt die Strahlqualität kaum, was zur Zerstörungssicherheit beiträgt.

Fig. 4 zeigt einen alternativen Aufbau der Verstärker 4. Hier ist das lichtverstärkende bzw. laseraktive Material als vorzugsweise spulenförmig aufgewickelte ― vorzugsweise flexible, lichtverstärkende bzw. laseraktive ― Lichtleitfaser ausgebildet. Diese gewickelte Lichtleitfaser 12 wird wiederum durch eine Pumpquelle 13 gepumpt. Die Triggerung des Verstärkers 4 und damit die Ausbildung von Zündimpulsen 9 erfolgt wiederum durch die Stromversorgung der Pumpquelle 13. Das verwendete Grundprinzip der zeitlich getriggerten Verstärkung von Masterlichtimpulsen 8 entspricht auch beim Aufbau gemäß Fig. 4 dem in Fig. 3 dargestellten Schema.

## Patentansprüche

1. Einrichtung zum Zünden eines Kraftstoff-Luftgemisches im Brennraum eines Verbrennungsmotors, insbesondere eines stationären Gasmotors, mit mindestens einer Lichtquelle, einer optischen Übertragungseinrichtung und einer Einkopplungsoptik zum Fokussieren von Licht in den Brennraum, **dadurch gekennzeichnet, daß** mindestens eine Masterlichtquelle (1) zur laufenden, vorzugsweise periodischen Abgabe von ungetriggerten, selbst nicht zündfähigen Masterlichtimpulsen (8) vorgesehen ist, und daß die Übertragungseinrichtung (2, 3, 4, 7) mindestens einen Verstärker (4) umfaßt, der selektiv triggerbar ist und einzelne oder Gruppen von Masterlichtimpulsen (8) auf ein Energieniveau (9) verstärkt, das zur Zündung des Kraftstoff-Luftgemisches ausreicht.

2. Einrichtung nach Anspruch 1, **dadurch gekennzeichnet, daß** die Masterlichtquelle (1) ein Laser ist.

3. Einrichtung nach Anspruch 2, **dadurch gekennzeichnet, daß** der Laser ein ― vorzugsweise diodengepumpter und/oder passiv gütegeschalteter und/oder aktiv gütegeschalteter - Festkörperlaser ist.

4. Einrichtung nach Anspruch 3, **dadurch gekennzeichnet, daß** der Festkörperlaser ein Yb-Laser und/oder Nd-Laser ― vorzugsweise Nd-Laser mit Cr⁴⁺ sättigbarem Absorber ― ist.

5. Einrichtung nach einem der Ansprüche 1 bis 4, **dadurch gekennzeichnet, daß** die Masterlichtquelle (1) Lichtpulse bzw. Laserpulse (8) mit einer Wiederholfrequenz von 1 bis 25 kHz ― vorzugsweise von 5 kHz- aussendet.

6. Einrichtung nach einem der Ansprüche 1 bis 5, **dadurch gekennzeichnet, daß** die Masterlichtquelle (1) Lichtpulse bzw. Laserpulse (8) mit einer Pulsdauer von 1 ns bis 500 ns ― vorzugsweise von 100 ns bis 300 ns - aussendet.

7. Einrichtung nach einem der Ansprüche 1 bis 6, **dadurch gekennzeichnet, daß** die Wellenlänge des verwendeten Lichts zwischen 0,5 µm und 20 µm ― vorzugsweise zwischen 0,5 µm und 5 µm - liegt.

8. Einrichtung nach einem der Ansprüche 1 bis 7, **dadurch gekennzeichnet, daß** mindestens ein Verstärker (4) der Übertragungseinrichtung mindestens einen lichtverstärkenden ― vorzugsweise laseraktiven ― Lichtleiter (12), vorzugsweise eine flexible Lichtleitfaser umfaßt.

9. Einrichtung nach einem der Ansprüche 1 bis 7, **dadurch gekennzeichnet, daß** mindestens ein Verstärker (4) der Übertragungseinrichtung mindestens ein lichtverstärkendes ― vorzugsweise laseraktives ― monolithisches Stäbchen (15) und/oder mindestens ein lichtverstärkendes ― vorzugsweise laseraktives - Kristallscheibchen (15) umfaßt.

10. Einrichtung nach einem der Ansprüche 8 oder 9, **dadurch gekennzeichnet, daß** mindestens ein Verstärker (4) das Energieniveau der Licht- bzw. Laserimpulse auf 0,5 mJ bis 10 mJ - vorzugsweise auf 1 mJ bis 5 mJ - verstärkt.

11. Einrichtung nach Anspruch 8 oder 10, **dadurch gekennzeichnet, daß** im Fall einer lichtverstärkenden und/oder laseraktiven, vorzugsweise flexiblen, Lichtleitfaser (12) diese einen, vorzugsweise spulenförmig, aufgewickelten Abschnitt aufweist.

12. Einrichtung nach einem der Ansprüche 8 bis 11, **dadurch gekennzeichnet, daß** zumindest eine triggerbare auf mindestens einen lichtverstärkenden, vorzugsweise laseraktiven, Lichtleiter (12) und/oder mindestens ein lichtverstärkendes vorzugsweise laseraktives monolithisches Stäbchen (15) und/oder mindestens ein lichtverstärkendes vorzugsweise laseraktives Kristallscheibchen (15) einwirkende Pumplichtquelle (13) vorgesehen ist.

13. Einrichtung nach Anspruch 12, **dadurch gekennzeichnet, daß** die Pumplichtquelle (13) ein Halbleiterlaser ist.

14. Einrichtung für einen mehrzylindrigen Verbrennungsmotor nach einem der Ansprüche 1 bis 13, **dadurch gekennzeichnet, daß** für mehrere Zylinder (5) jeweils nur eine gemeinsame Masterlichtquelle (1) vorgesehen ist und die optische Übertragungseinrichtung (2, 3, 4, 7) eine oder mehrere Abzweigungen (3) aufweist, um das Masterlicht (8) auf zylinderselektive, triggerbare Verstärker (4) aufzuteilen.

## Claims

1. Apparatus for igniting a fuel/air mixture in a combustion chamber of a combustion engine, in particular of a stationary gas engine, with at least one light source, an optical transmission apparatus and a coupling optic for focusing light into said combustion chamber, **characterized in that** at least one master light source (1) is provided for the ongoing, preferably periodical emission of untriggered, themselves non-flammable master light pulses (8) and that said transmission apparatus (2, 3, 4, 7) includes at least one amplifier (4) which is selectively triggerable and amplifies individual or groups of master light pulses (8) to an energy level (9) which is sufficient to ignite said fuel/air mixture.

2. Apparatus according to claim 1, **characterized in that** said master light source (1) is a laser.

3. Apparatus according to claim 2, **characterized in that** said laser is a solid-state laser which preferably is diode-pumped and/or passively Q-switched and/or actively Q-switched.

4. Apparatus according to claim 3, **characterized in that** said solid-state laser is a Yb laser and/or Nd laser, preferably an Nd laser with Cr⁴⁺ saturable absorber.

5. Apparatus according to one of the claims 1 to 4, **characterized in that** said master light source (1) emits light pulses or laser pulses (8) with a repetition frequency of 1 to 25 kHz, preferably 5 kHz.

6. Apparatus according to one of the claims 1 to 5, **characterized in that** said master light source (1) emits light pulses or laser pulses (8) with a pulse duration of 1 ns to 500 ns, preferably 100 ns to 300 ns.

7. Apparatus according to one of the claims 1 to 6, **characterized in that** the wavelength of said light used is between 0.5 µm and 20 µm, preferably between 0.5 µm and 5 µm.

8. Apparatus according to one of the claims 1 to 7, **characterized in that** at least one amplifier (4) of said transmission apparatus includes at least one light-amplifying ― preferably laser active ― light guide (12), preferably being a flexible optical fibre.

9. Apparatus according to one of the claims 1 to 7, **characterized in that** at least one amplifier (4) of said transmission apparatus includes at least one light-amplifying ― preferably laser active ― monolithic rod (15) and/or at least one light-amplifying, preferably laser active, crystal wafer (15).

10. Apparatus according to one of the claims 8 or 9, **characterized in that** said amplifier (4) amplifies the energy level of said light or laser pulses to 0.5 mJ to 10 mJ, preferably to 1 mJ to 5 mJ.

11. Apparatus according to claim 8 or 10, **characterized in that**, in the case of a light-amplifying and/or laser active ― preferably flexible ― optical fibre (12), this has a section that is wound up preferably in a coil shape.

12. Apparatus according to one of the claims 8 to 11, **characterized in that** at least one triggerable pump light source (13) acting on at least one light-amplifying ― preferably laser active ― light guide (12) and/or at least one light-amplifying ― preferably laser active ― monolithic rod (15) and/or at least one light-amplifying ― preferably laser active ― crystal wafer (15) is provided.

13. Apparatus according to claim 12, **characterized in that** said pump light source (13) is a semiconductor laser.

14. Apparatus for a multi-cylinder combustion engine according to one of the claims 1 to 13, **characterized in that** for several cylinders (5), only one common master light source (1) is provided respectively and said optical transmission apparatus (2, 3, 4, 7) has one or more branches (3) in order to distribute said master light (8) to cylinder-selective, triggerable amplifiers (4).

## Revendications

1. Dispositif pour allumer un mélange carburant-air dans la chambre de combustion d'un moteur à combustion interne, notamment d'un moteur à gaz stationnaire avec au moins une source lumineuse, un dispositif de transmission optique et une optique d'injection pour la focalisation de lumière dans la chambre de combustion, **caractérisé en ce qu'**il est prévu au moins une source lumineuse maître (1) pour la délivrance constante, de préférence périodique d'impulsions lumineuses maîtres (8) non déclenchées, sans propre pouvoir d'allumage, et **en ce que** le dispositif de transmission (2, 3, 4, 7) comprend au moins un amplificateur (4) susceptible d'être déclenché de façon sélective et qui amplifie des impulsions maîtres individuelles ou groupes d'impulsions maîtres (8) à un niveau énergétique (9) suffisant pour allumer le mélange carburant-air.

2. Dispositif selon la revendication 1, **caractérisé en ce que** la source lumineuse maître (1) est un laser.

3. Dispositif selon la revendication 2, **caractérisé en ce que** le laser est un laser à corps solide (de préférence pompé par diodes et/ou à modulation de qualité passive et/ou à modulation de qualité active).

4. Dispositif selon la revendication 3, **caractérisé en ce que** le laser à corps solide est un laser Yb et/ou un laser Nd - de préférence un laser Nd avec absorbeur saturable par Cr⁴⁺.

5. Dispositif selon l'une quelconque des revendications 1 à 4, **caractérisé en ce que** la source lumineuse maître (1) émet des impulsions lumineuses, respectivement des impulsions laser (8) à une fréquence de répétition de 1 à 25 kHz - de préférence de 5 kHz.

6. Dispositif selon l'une quelconque des revendications 1 à 5, **caractérisé en ce que** la source lumineuse maître (1) émet des impulsions lumineuses, respectivement des impulsions laser (8) avec une durée d'impulsions de 1 ns à 500 ns - de préférence de 100 ns à 300 ns.

7. Dispositif selon l'une quelconque des revendications 1 à 6, **caractérisé en ce que** la longueur d'onde de la lumière utilisée se situe entre 0,5 µm et 20 µm - de préférence entre 0,5 µm et 5 µm.

8. Dispositif selon l'une quelconque des revendications 1 à 7, **caractérisé en ce qu'**au moins un amplificateur (4) de l'unité de transmission comprend au moins un guide d'ondes optique (12) amplificateur de lumière - de préférence actif dans un laser - de préférence une fibre optique flexible.

9. Dispositif selon l'une quelconque des revendications 1 à 7, **caractérisé en ce qu'**au moins un amplificateur (4) du dispositif de transmission comprend au moins une baguette monolithique (15) amplificatrice de lumière - de préférence active dans un laser - et/ou au moins une tranche de silicium (15) amplificatrice de lumière - de préférence active dans un laser.

10. Dispositif selon l'une quelconque des revendications 8 ou 9, **caractérisé en ce qu'**au moins un amplificateur (4) amplifie le niveau énergétique des impulsions lumineuses, respectivement des impulsions laser à de 0,5 mJ à 10 mJ - de préférence à de 1 mJ à 5 mJ.

11. Dispositif selon la revendication 8 ou 10, **caractérisé en ce que** dans le cas d'une fibre optique (12) amplifiant la lumière et/ou active dans un laser, de préférence flexible, cette dernière comporte un tronçon enroulé, de préférence en forme de bobine.

12. Dispositif selon l'une quelconque des revendications 8 à 11, **caractérisé en ce qu'**on a prévu au moins une source lumineuse de pompage (13) déclenchable agissant sur au moins un guide d'ondes optiques (12) amplificateur de lumière, de préférence actif dans un laser et/ou sur au moins une baguette monolithique (15) amplificatrice de lumière, de préférence active dans un laser et/ou sur au moins une tranche de silicium (15) amplificatrice de lumière, de préférence active dans un laser.

13. Dispositif selon la revendication 12, **caractérisé en ce que** la source lumineuse de pompage (13) est un laser à semi-conducteurs.

14. Dispositif pour un moteur à combustion interne à plusieurs cylindres selon l'une quelconque des revendications 1 à 13, **caractérisé en ce que** pour plusieurs cylindres (5), on n'a prévu chaque fois qu'une source lumineuse maître (1) commune et **en ce que** le dispositif de transmission optique (2, 3, 4, 7) comporte une ou plusieurs dérivations (3) pour distribuer la lumière maître (8) sur des amplificateurs (4) déclenchables, sélectifs de cylindres.
